# EUROPÄISCHE PATENTSCHRIFT

(11) **EP 1 064 798 B1**
(45) Veröffentlichungstag und Bekanntmachung des Hinweises auf die Patenterteilung: **17.07.2002**
(21) Anmeldenummer: 99919089.5
(22) Anmeldetag: 16.03.1999
(51) Int. Cl.: H04Q 7/20, H04B 7/185

(54) **VERFAHREN UND FUNKKOMMUNIKATIONSSYSTEM ZUR VERBINDUNGSSTEUERUNG BEI ANRUFEN VON UND ZU FUNKTEILNEHMERN**
METHOD AND RADIOCOMMUNICATIONS SYSTEM FOR CONTROLLING CONNECTIONS FOR CALLS TO AND BY RADIO SUBSCRIBERS
PROCEDE ET SYSTEME DE RADIOCOMMUNICATION POUR ASSURER LA COMMANDE DE CONNEXION EN CAS D'APPELS EMANANT D'ABONNES OU DIRIGES VERS DES ABONNES

(30) Priorität: 24.03.1998 DE 19812916
(43) Veröffentlichungstag der Anmeldung: 03.01.2001
(73) Patentinhaber: SIEMENS AKTIENGESELLSCHAFT, 80333 München (DE)
(72) Erfinder: MUYSEWINKEL, Koen, B-3220 Holsbeek (BE); HONDEGHEM, Henk, B-9220 Hamme (BE); RAEYMAEKERS, Dirk, B-2070 Zwijndrecht (BE)
(86) Internationale Anmeldenummer: DE9900734
(87) Internationale Veröffentlichungsnummer: WO9949673

(56) Entgegenhaltungen:
- WO-A-95/24789
- US-A- 5 081 703

## Beschreibung

Die Erfindung bezieht sich auf ein Verfahren zur Verbindungssteuerung bei Anrufen von/zu Funkteilnehmern in einem Funk-Kommunikationssystem sowie auf ein entsprechendes Funk-Kommunikationssystem.

Funk-Kommunikationssysteme dienen der Ergänzung bzw. Erweiterung von bestehenden öffentlichen oder privaten Kommunikationssystemen. Beispielsweise können Funk-Kommunikationssysteme im Unterschied zu öffentlichen Kommunikationssystemen, z.B. dem öffentlichen Fernsprechnetz, zumindest teilweise drahtlose Kommunikationsverbindungen nutzen. Bekanntlich weisen derartige Funk-Kommunikationssysteme funktechnische Einrichtungen, zusammenfassbar zu mindestens einem Funkteilsystem, zur drahtlosen Anbindung von jeweils den Zugang von Funkteilnehmern ermöglichenden Kommunikationsendgeräten sowie vermittlungstechnische Einrichtungen zur Durchschaltung von Verbindungen - Signalisierungsverbindungen und Nutzkanalverbindungen - auf. Einem Funkteilsystem ist üblicherweise ein zugehöriges Funkgebiet zur Betreuung der in dem Gebiet sich bewegenden Funkteilnehmer mit ihren Kommunikationsendgeräten zuordenbar. Daraus ergibt sich, daß in einem Funk-Kommunikationssystem untereinander vernetzte Vermittlungseinrichtungen, Funkeinrichtungen und Kommunikationsendgeräte auf vielfältigste Weise miteinander verbunden sein können.

Jede Verbindung auf Grund eines abgehenden oder ankommenden Anrufs, in den zumindest ein Funkteilnehmer involviert ist, muß üblicherweise über die Vermittlungseinrichtung geführt werden. Für bestimmte Gebiete, besonders abgelegene Gebiete (Remote Areas) - z.B. Inseln, Bergtäler, Wüsten usw. - , die von einem Funkteilsystem mit entsprechenden funktechnischen Einrichtungen bedient werden, ist der Einsatz und das Betreiben einer eigenen Vermittlungseinrichtung pro Gebiet wirtschaftlich gegebenenfalls nicht sinnvoll. Der Einsatz der vorhandenen Telekommunikationsressourcen ist für diesen Fall zu optimieren. Darüber hinaus verfügen nicht wenige Länder über keine Infrastruktur, um die Anbindung der funktechnischen Einrichtungen an eine oder mehrere zentrale Vermittlungseinrichtungen in einem Funk-Kommunikationssystem zur Nutzung von Telekommunikationsdiensten mit vertretbarem Aufwand herzustellen.

Aus der WO 95/24789 ist ein Verfahren zur Verbindungssteuerung in einem Funk-Kommunikationssystem bekannt, das von den Basisstationen entfernte Transkodiereinheiten zum Kodieren und Dekodieren von Sprachsignalen aufweist. Bei einem funkgebietsinternen Anruf zwischen Funkteilnehmern oder bei einem Anruf zwischen Funkteilnehmern verschiedener Funkgebiete werden nur Signalisierungsverbindungen zur Vermittlungseinrichtung durchgeschaltet. Die Nutzkanalverbindungen werden für den erstgenannten Fall vom Funkteilsystem selbst und für den zweitgenannten Fall zwischen unterschiedlichen Funkteilsystemen geschaltet.

Aus der US 5,081,703 ist ein Satelliten-Kommunikationssystem für ländliche Gebiete bekannt, bei dem von den Satelliten empfangene Signale von Umsetzeinheiten in Signale für eine Vermittlungseinrichtung und umgekehrt konvertiert werden. Dabei kommunizieren die Umsetzeinheiten mit Mobilstationen, die sich in vorgegebenen geografischen Gebieten aufhalten.

Daher ist es Aufgabe der vorliegenden Erfindung, ein Verfahren und ein Funk-Kommunikationssystem anzugeben, durch das die Verbindungssteuerung bei Anrufen von/zu Funkteilnehmern verbessert wird.

Diese Aufgabe wird gemäß der Erfindung durch die Merkmale des Patentanspruchs 1 hinsichtlich des Verfahrens und durch die Merkmale des Patentanspruchs 10 hinsichtlich des Funk-Kommunikationssystems gelöst. Weiterbildungen der Erfindung sind den Unteransprüchen zu entnehmen.

Ausgehend von einem Funk-Kommunikationssystem mit zumindest einem Funkteilsystem für den Zugang der Funkteilnehmer in einem zugehörigen Funkgebiet und mit zumindest einer Vermittlungseinrichtung zur Durchschaltung von Verbindungen sieht das erfindungsgemäße Verfahren und Funk-Kommunikationssystem vor, die Verbindungen zwischen dem Funkteilsystem und der Vermittlungseinrichtung über eine Funkübertragungseinheit derart zu führen,
- daß bei einem funkgebietsinternen Anruf zwischen Funkteilnehmern innerhalb desselben Funkgebiets oder bei einem Anruf zwischen Funkteilnehmern in verschiedenen Funkgebieten nur Signalisierungsverbindungen von der Funkübertragungseinheit zur Vermittlungseinrichtung durchgeschaltet werden, und
- daß Nutzkanalverbindungen für den Fall des funkgebietsinternen Anrufs vom Funkteilsystem selbst oder für den Fall des Anrufs zwischen Funkteilnehmern in verschiedenen Funkgebieten von der Funkübertragungseinheit zwischen einem ersten Funkteilsystem und einem zweiten Funkteilsystem geschaltet werden.

Dadurch, daß nur die Signalisierungsverbindungen über die Funkübertragungseinheit - vorzugsweise ausgebildet als Satellit - bis zur Vermittlungseinrichtung, jedoch die Nutzkanalverbindungen (traffic channels) entweder lokal im Funkteilsystem oder in der Funkübertragungseinheit geschaltet werden, kann die Verbindungssteuerung - insbesondere für ein abgelegenes Funkgebiet ohne eigene Vermittlungseinrichtung - mit dynamischer Schaltkapazität optimiert werden. Damit genügt es, jedes derartige Funkgebiet nicht mit einer überdimensionierten Vermittlungseinrichtung, sondern nur mit funktechnischen Einrichtungen auszustatten, und die Durchschaltefunktionalität einer Vermittlungseinrichtung für die möglichst optimal einzusetzenden Nutzkanalverbindungen in dem Funkteilsystem bzw. der Funkübertragungseinheit erfindungsgemäß vorzusehen. Ein weiterer Vorteil des Erfindungsgegenstands gegenüber einer Lösung, bei der die Nutzkanalverbindungen in jedem Fall bis zur Vermittlungseinrichtung durchgeschaltet werden, besteht darin, daß bei dem funkgebietsinternen Anruf überhaupt keine Nutzkanalverbindungen und bei dem Anruf zwischen Funkteilnehmern in verschiedenen Funkgebieten weniger Nutzkanalverbindungen - wegen Umgehung (Bypassing) der Vermittlungseinrichtung bei beiden Teilverbindungen des Anrufs - in der Funkübertragungseinheit zu schalten sind. In beiden Fällen ergibt sich dadurch ein Kapazi-tätsgewinn hinsichtlich der Übertragungsbandbreite in der Funkübertragungseinheit, der am größten bei der Durchschaltung der Nutzkanalverbindungen mit den Nutzinformationen im Fall des funkgebietsinternen Anrufs ist.

Gemäß einer vorteilhaften Weiterbildung der Erfindung werden auch für den Fall eines Anrufs, der einen Funkteilnehmer und einen Teilnehmer eines anderen Kommunikationssystems betrifft, nur die Signalisierungsverbindungen von der Funkübertragungseinheit zu der Vermittlungseinrichtung durchgeschaltet, während die Nutzkanalverbindungen zwischen dem Funk-Kommunikationssystem und dem anderen Kommunikationssystem von der Funkübertragungseinheit geschaltet werden. Damit ergibt sich ein Kapazitätsgewinn zusätzlich für den Fall eines Anrufs, bei dem Nutzkanalverbindungen vom anderen Kommunikationssystem, beispielsweise einem leitungsgebundenen öffentlichen Kommunikationsnetz (PLMN), üblicherweise zur Vermittlungseinrichtung des Funk-Kommunikationssystems geschaltet werden müssten, gemäß der Weiterbildung aber bereits von der Funkübertragungseinheit direkt zum Funkteilsystem weitergeleitet werden.

Gemäß einer anderen Weiterbildung der Erfindung hat es sich als günstig erwiesen, wenn über eine durchgeschaltete Signalisierungsverbindung von der Vermittlungseinrichtung eine Steuerinformation rückgesendet wird, anhand der das Funkteilsystem und/oder die Funkübertragungseinheit das Schalten der Nutzkanalverbindungen veranlassen. Damit kann das Funkteilsystem oder die Funkübertragungseinheit in einfacher Art und Weise anhand der empfangenen Steuerinformation entscheiden, ob sie das lokale Durchschalten der Nutzverbindungen durchführen soll oder nicht.

Dabei ist es von besonderem Vorteil, wenn über eine durchgeschaltete Signalisierungsverbindung von der Vermittlungseinrichtung ein Kennzeichen zur Identifikation von jeweils in der Vermittlungseinrichtung für den Anruf genutzten Leitungsbaugruppen rückgesendet wird, anhand dessen das Funkteilsystem das Vorliegen eines funkgebietsinternen Anrufs überprüft und das Schalten der Nutzkanalverbindungen veranlaßt. Mit dieser Information informiert die Vermittlungseinrichtung das Funkteilsystem auf einfache Art und Weise, daß das lokale Durchschalten der Nutzkanalverbindungen wegen eines funkgebietsinterner Anruf möglich ist.

Andere Weiterbildungen der Erfindung sehen vor, daß das Schalten der Signalisierungsverbindungen und der Nutzkanalverbindungen im jeweiligen Funkteilsystem von Schnittstelleneinheiten mit Durchschaltefähigkeitfähigkeit sowie das Schalten der Signalisierungsverbindungen zur Vermittlungseinrichtung von weiteren Schnittstelleneinheiten mit Durchschaltefähigkeit gesteuert wird.

Auch hat es sich als günstig erwiesen, daß das Schalten der Signalisierungsverbindungen und der Nutzkanalverbindungen für die Aufwärtsübertragungsrichtung vom Kommunikationsendgerät zum Funkteilsystem nach Durchführung einer Transkodier- und Datenratenadaptionsfunktion und für die Abwärtsübertragungsrichtung vom Funkteilsystem zum Kommunikationsendgerät vor Durchführung der Transkodier- und Datenratenadaptionsfunktion im jeweiligen Funkteilsystem durchgeführt wird.

Anhand von zeichnerischen Darstellungen wird der Erfindungsgegenstand im folgenden näher erläutert.

Dabei zeigen
- FIG 1: das Blockschaltbild eines Funk-Kommunikationssystems,
- FIG 2: eine schematische Darstellung der Verbindungssteuerung gemäß der Erfindung für einen funkgebietsinternen Anruf, und
- FIG 3: eine schematische Darstellung der Verbindungssteuerung gemäß der Erfindung für einen Anruf zwischen Funkteilnehmern in verschiedenen Funkgebieten.

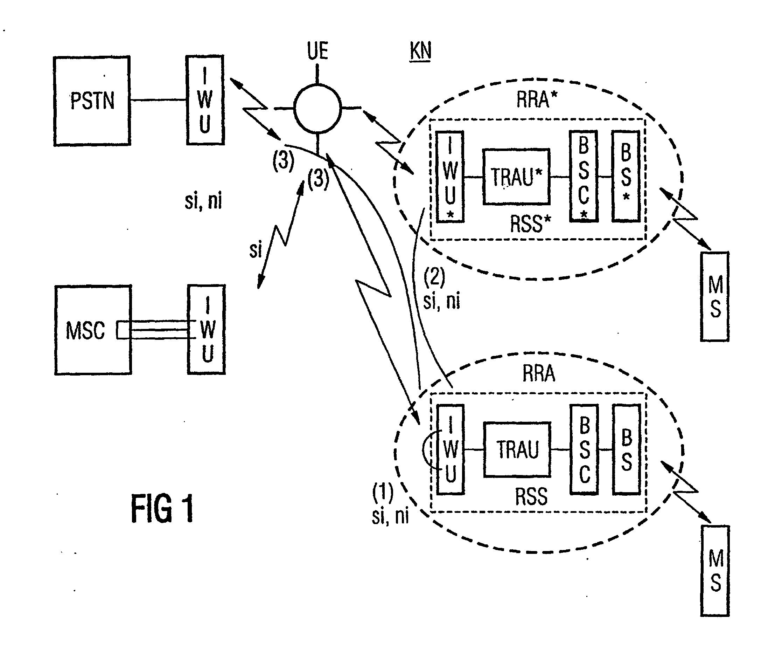

FIG 1 zeigt das Blockschaltbild eines Funk-Kommunikationssystems KN, das üblicherweise mehrere Funkteilsysteme zur funktechnischen Bedienung von Funkgebieten, in denen sich Funkteilnehmer aufhalten, aufweist. Im gewählten Beispiel sind zwei Funkteilsysteme RSS, RSS* (Radio Subsystem) für eine Funkabdeckung der zugehörigen Funkgebiete RRA, RRA* (Remote Radio Area) dargestellt, über die den Zugang der Funkteilnehmer ermöglichende Kommunikationsendgeräte - Mobilstationen MS - über eine Funkschnittstelle anschließbar sind. Als Beispiele für die funktechnischen Einrichtungen sind Einrichtungen eines nach dem GSM-Verfahren betriebenen Funk-Kommunikationssystems gewählt. Die Erfindung ist jedoch nicht auf GSM-Systeme beschränkt und kann unabhängig von der Zugriffstechnik für die Funkübertragung - z.B. TDMA (Time Division Multiple Access), FDMA (Frequency Division Multiple Access), CDMA (Code Division Multiple Access) usw. - auch in anderen Funk-Kommunikationssystemen angewendet werden. Darüber hinaus verfügt das Funk-Kommunikationssystem KN über mindestens eine Vermittlungseinrichtung MSC zur Durchschaltung der Verbindungen, d.h. Signalisierungsverbindungen und Nutzkanalverbindungen, für Anrufe von/zu den Funkteilnehmern. Ein Übergang vom Funk-Kommunikationssystem KN in ein anderes Kommunikationssystem - im vorliegenden Beispiel zum öffentlichen Fernsprechnetz PLMN - ist möglich, sodaß auch die Verbindungen bei Anrufen zwischen einem Teilnehmer des anderen Kommunikationssystems und einem Funkteilnehmer des Funk-Kommunikationssystem KN gemäß dem Gegenstand der Erfindung gesteuert werden können.

Jedes Funkteilsystem RSS, RSS* weist bekanntlich als Gegeneinrichtung der Mobilstationen MS eine Basisstation BS, BS* zur Kommunikation über die Funkschnittstelle auf. Mit der Basisstation BS, BS* ist eine Basisstationssteuerung BSC, BSC* zum Management der Funkressourcen - wie z.B. Funkkanalzuteilung - verbunden. An die Basisstationssteuerung BSC, BSC* ist eine Transkodier- und Datenratenadaptionseinheit TRAU, TRAU* angeschaltet, die dazu dient, die auf der Funkschnittstelle sowie im Funkteilsystem RSS, RSS* benutzte Übertragungsrate - z.B. 16 kbit/s - und die in der Vermittlungseinrichtung MSC verarbeitete Übertragungsrate - z.B. 64 kbit/s - einander in beiden Übertragungsrichtungen (uplink und downlink) anzupassen. Darüber hinaus übernimmt die Transkodier- und Datenratenadaptionseinheit TRAU, TRAU* die Aufgabe, die über die Funkschnittstelle komprimiert übertragenen Informationen zu dekomprimieren.

Um eine Anbindung der Funkteilsysteme RSS, RSS* ohne eigene Vermittlungseinrichtung - insbesondere für abgelegene Funkgebiete - an die an einem beliebigen Ort befindliche Vermittlungseinrichtung MSC herzustellen, ist eine Funkübertragungseinheit UE zwischengeschaltet. Dies bedeutet für die Verbindungssteuerung, daß bei funkgebietsinternen Anrufen (Intra Remote Radio Area call) - siehe Fall (1) - , die zwischen Funkteilnehmern innerhalb desselben Funkgebiets RRA ablaufen, die Durchschaltung der Nutzverbindungen ni lokal vom zugehörigen Funkteilsystem RSS durchgeführt wird. Nur die Signalisierungsverbindungen si werden über die Funkübertragungseinheit UE zur Vermittlungseinrichtung MSC weitergeleitet. Die Übertragungsbandbreite der vorzugsweise aus einem Satellit bestehenden Funkübertragungseinheit UE wird für die Nutzverbindungen ni - die die Nutzinformationen in Form von Sprache und Daten enthalten - durch das lokale Durchschalten wirtschaftlicher ausgenutzt, da ansonsten bei jedem Anruf die erste Teilnutzverbindung des anrufenden Funkteilnehmers und die zweite Teilnutzverbindung des angerufenen Funkteilnehmers jedesmal über den Satellit geführt werden müssten. Die lokale Durchschaltefunktionalität im Funkteilsystem RSS ist in einer Schnittstelleneinheit IWU realisiert, die vorzugsweise an die Transkodier- und Datenratenadaptionseinheit TRAU angeschaltet oder in diese integriert ist.

Während des Verbindungsaufbaus weist die Vermittlungseinrichtung MSC üblicherweise Übertragungskanäle dem Funkteilsystem RSS für beide Funkteilnehmer zu. Dabei stellt sie fest - über bekannte GSM-Prozeduren zur Gewinnung der Aufenthaltsorte - , daß beide Funkteilnehmer sich in demselben Funkgebiet RRA aufhalten. Daher sendet die Vermittlungseinrichtung MSC ein Kennzeichen zur Identifikation der jeweils in der Vermittlungseinrichtung MSC für die beiden Teilverbindungen genutzten Leitungsbaugruppen über eine Signalisierungsverbindung si in das Funkgebiet RRA, anhand dessen die Schnittstelleneinheit IWU des Funkteilsystems RSS das Vorliegen des funkgebietsinternen Anrufs erkennt und das interne Schalten der Nutzkanalverbindungen ni veranlaßt. Die Signalisierungsverbindungen si sind durchgängig vom Funkteilsystem RSS über den Satellit UE bis zur Vermittlungseinrichtung MSC geschaltet. An der Information über das Vorliegen des funkgebietsinternen Anrufs erkennt der Satellit UE, daß von ihm keine Übertragungskanäle für die Nutzverbindungen ni bereitzustellen sind.

Bei einem Anruf zwischen Funkteilnehmern, die sich in den unterschiedlichen Funkgebieten RRA, RRA* aufhalten - siehe Fall (2) - erfolgt die Verbindungssteuerung derart, daß vom Satellit UE wiederum nur die Signalisierungsverbindungen si zur Vermittlungseinrichtung MSC durchgeschaltet und die Nutzkanalverbindungen ni zwischen dem Funkteilsystem RSS und dem Funkteilsystem RSS* geschaltet werden. Unterstützung findet die Durchschaltung der Nutzkanalverbindungen ni im Satellit UE durch die dem jeweiligen Funkteilsystem RSS, RSS* zugeordnete Schnittstelleneinheit IWU, IWU*. Dies bedeutet, daß der Satellit UE Übertragungskanäle für die Sprachsignalübertragung, die zu verschiedenen Funkteilsystemen RSS, RSS* bzw. Funkgebieten RRA, RRA* gehören, direkt verknüpfen kann, ohne die Vermittlungseinrichtung MSC einzuschalten (Bypassing). Dies führt zu einem Kapazitätsgewinn bezüglich der Übertragungsbandbreite des Satellit UE. Die Signalisierungsverbindungen si sind auch für derartige Anrufe durchgängig vom jeweiligen Funkteilsystem RSS, RSS* über den Satellit UE bis zur Vermittlungseinrichtung MSC geschaltet.

Ein weiteres Beispiel für die Einsparung von Bandbreite im Satellit UE besteht darin, die Vermittlungseinrichtung MSC bei der Verbindungssteuerung für Nutzkanalverbindungen ni zu umgehen, die auf Grund von Anrufen zwischen dem Funkteilnehmer und dem Teilnehmer des anderen Kommunikationssystems PSTN zu schalten sind. In gleicher Weise wie oben beschrieben, werden nur die Signalisierungsverbindungen si vom Satellit UE zu der Vermittlungseinrichtung MSC durchgeschaltet, wohingegen die Nutzkanalverbindungen ni vom Satellit UE direkt zwischen dem für den Funkteilnehmer zuständigen Funkteilsystem - z.B. dem Funkteilsystem RSS - des Funk-Kommunikationssystem KN und dem für den anderen Teilnehmer zuständigen Kommunikationssystem PSTN durchgeschaltet werden. Auch das Kommunikationssystem PSTN verfügt über eine Schnittstelleneinheit IWU mit Durchschaltefähigkeit zur Unterstützung des direkten Schaltens der Nutzkanalverbindungen ni - siehe Fall (3) in FIG 1.

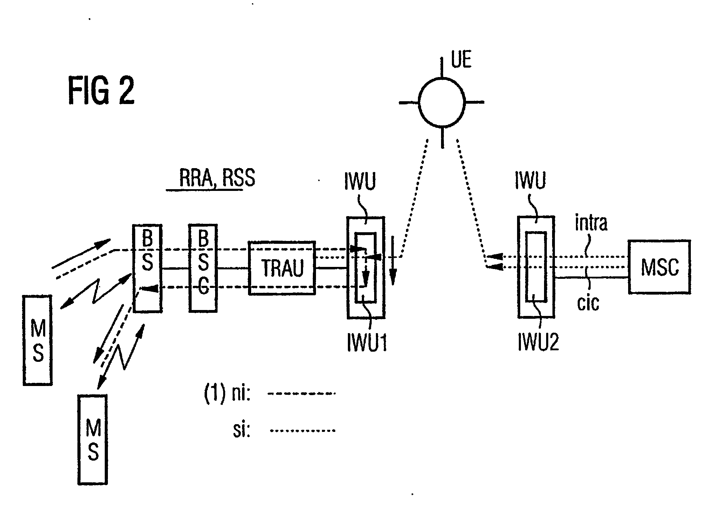

Fig 2 zeigt eine schematische Darstellung der Verbindungssteuerung gemäß der Erfindung mit den daran beteiligten Einrichtungen für den funkgebietsinternen Anruf gemäß Fall (1) der FIG 1. Dabei ist das Routing der Nutzkanalverbindungen ni als strichlinierter Weg und das Routing der Signalisierungsverbindungen si als gepunkteter Weg gezeichnet. Der Anruf wird im Funkgebiet RRA von der Mobilstation MS eines ersten Funkteilnehmers initiiert, und ist an einen zweiten Funkteilnehmer gerichtet. Das Funkteilsystem RSS behandelt den Anruf gemäß den bekannten GSM-Prozeduren. Die Vermittlungseinrichtung MSC, die über den Satellit UE mit dem Funkteilsystem RSS gekoppelt ist, erkennt ebenfalls gemäß den bekannten GSM-Prozeduren, daß sich der angerufene Funkteilnehmer in demselben Funkgebiet RRA befindet. Sie generiert daher die Steuerinformation intra, anhand der das Vorliegen des funkgebietsinternen Anrufs überprüfbar ist. Darüber hinaus erzeugt die Vermittlungseinrichtung MSC ein Kennzeichen cic (circuit identity code), das die in der Vermittlungseinrichtung MSC genutzten Leitungsbaugruppen (trunks) für die vom Anruf betroffenen Funkteilnehmer kennzeichnet. Beide Signalisierungsinformationen cic, intra werden von einer Interworkingeinheit IWU2, die in der Schnittstelleneinheit IWU der Vermittlungseinrichtung MSC angeordnet ist, über den Satellit UE zu einer Interworkingeinheit IWU1 der Schnittstelleneinheit IWU des betroffenen Funkteilsystems RSS auf einer Signalisierungsverbindung si gesendet.

Die Schnittstelleneinheit IWU bzw. Interworkingeinheit IWU1 im Funkteilsystem RSS erkennt durch Auswertung der empfangenen Informationen cic, intra, daß das lokale Durchschalten der Nutzkanalverbindungen ni möglich ist, und veranlaßt die Durchschaltefunktion, getriggert über die empfangenen Signalisierungsinformationen. Daher erfolgt das Routing der Nutzkanalverbindungen ni über die Interworkingeinheit IWU1 der Schnittstelleneinheit IWU direkt zu den funktechnischen Einrichtungen des Funkteilsystems - TRAU, BSC und BS - zurück und von dort zur Mobilstation MS des angerufenen Funkteilnehmers - siehe fett gedruckte Pfeile.

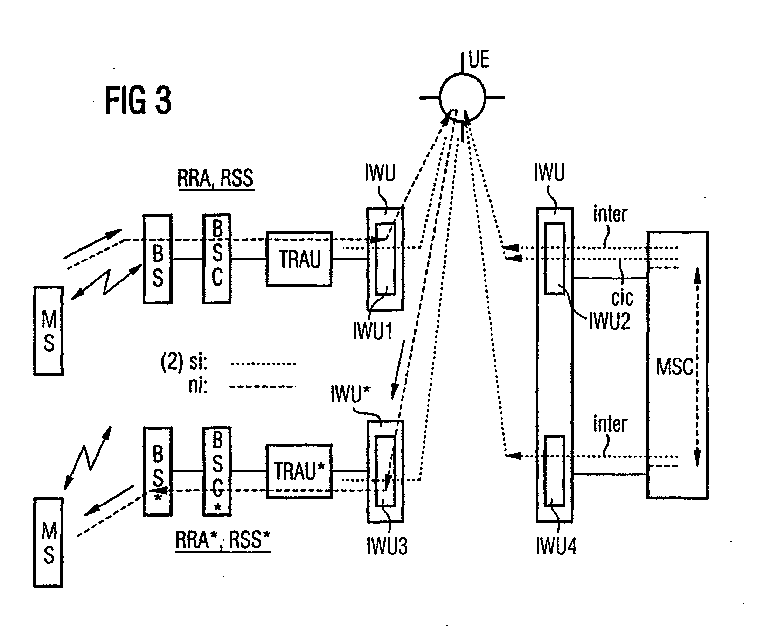

Fig 3 zeigt eine schematische Darstellung der Verbindungssteuerung gemäß der Erfindung mit den daran beteiligten Einrichtungen für den Anruf zwischen Funkteilnehmern in verschiedenen Funkgebieten RRA, RRA* gemäß Fall (2) der FIG 1. Dabei ist das Routing der Nutzkanalverbindungen ni - analog zur Darstellung in FIG 2 - als strichlinierter Weg und das Routing der Signalisierungsverbindungen si als gepunkteter Weg gezeichnet. Der Anruf wird im Funkgebiet RRA von der Mobilstation MS eines ersten Funkteilnehmers initiiert, und ist an einen zweiten Funkteilnehmer gerichtet. Das Funkteilsystem RSS behandelt den Anruf gemäß den bekannten GSM-Prozeduren. Die Vermittlungseinrichtung MSC, die über den Satellit UE mit dem Funkteilsystem RSS gekoppelt ist, erkennt ebenfalls gemäß den bekannten GSM-Prozeduren, daß sich der angerufene Funkteilnehmer in einem anderen Funkgebiet RRA* befindet. Sie generiert daher eine Steuerinformation inter, die angibt, daß der Anruf zwischen Funkteilnehmern in verschiedenen Funkgebieten RRA, RRA* abläuft. Sie empfängt auch das Kennzeichen cic (circuit identity code) für die in der Vermittlungseinrichtung MSC genutzten Leitungsbaugruppen. Die Signalisierungsinformationen werden von der Interworkingeinheit IWU2 über den Satellit UE auf einer Signalisierungsverbindung si gesendet und damit das Schalten der Nutzkanalverbindungen ni in der Interworkingeinheit IWU1 - an der Vermittlungseinrichtung MSC vorbei - zum Funkteilsystem RSS*. Darin weist die Schnittstelleneinheit IWU* eine Interworkingeinheit IWU3 auf, die das Durchschalten der Nutzkanalverbindungen ni für den Anruf ausführen soll. Daher folgt auf das Routing der Nutzkanalverbindungen ni von der Interworkingeinheit IWU1 zum Satellit UE die direkte Verbindung des Satellit UE mit der Interworkingeinheit IWU3. Gesteuert wird die Verbindung von der Interworkingeinheit IWU2. Im Funkteilsystems RSS* schaltet die Interworkingeinheit IWU3 die Nutzkanalverbindungen ni durch, sodaß die Nutzinformationen - vor allem Sprachsignale - zu den funktechnischen Einrichtungen - TRAU*, BSC* und BS* - und von dort zur Mobilstation MS des angerufenen Funkteilnehmers gelangen - siehe fett gedruckte Pfeile.

Die Vermittlungseinrichtung MSC weist neben der Interworkingeinheit IWU2 eine weitere Interworkingeinheit IWU4 auf, von der Signalisierungsinformationen - wie z.B. die Steuerinformation inter - bezüglich des im Funkgebiet RRA* befindlichen Funkteilnehmers und der für die zweite Teilverbindung benutzten Leitungsbaugruppen über den Satellit UE rückgesendet werden können. Das Durchschalteverfahren zur Verbindungssteuerung gemäß der Erfindung, das die Nutzkanalverbindungen lokal im Funkteilsystem oder direkt im Satellit schaltet, benötigt nur die Hälfte der üblichen Bandbreite, wenn jede Teilverbindung über die Vermittlungseinrichtung MSC geführt ist.

Eine zu FIG 2 analoge Vorgehensweise kann auch auf den in FIG 1 angedeuteten Fall (3) angewendet werden, daß die Durchschaltefunktionalität über den Satellit UE direkt auf die Nutzkanalverbindungen zwischen dem Kommunikationssystem PSTN und dem Funkteilsystem RSS des Funk-Kommunikationssystems KN wirkt. Voraussetzung ist die Anbindung der Vermittlungseinrichtung MSC an das Kommunikationssystem PSTN über eine Funkübertragungseinrichtung UE, vorzugsweise einen Satellit. Auch in diesem Fall führt die Umgehung der Vermittlungseinrichtung MSC zur Sprachsignalübertragung zu einem Kapazitätsgewinn, da keine der Teilverbindungen zur Vermittlungseinrichtung MSC geschaltet zu werden braucht.

Durch den Erfindungsgegenstand brauchen insbesondere abgelegene Funkgebiete nur mit den funktechnischen Einrichtungen ausgestattet zu werden, die dann über eine Funkübertragungseinrichtung UE lediglich signalisierungstechnisch mit einer beliebigen Vermittlungseinrichtung MSC des Funk-Kommunikationssystems verbunden sind und nutzkanalbezogen die Nutzinformationen selbst lokal durchschalten oder über die Funkübertragungseinrichtung direkt schalten.

## Patentansprüche

1. Verfahren zur Verbindungssteuerung in einem Funk-Kommunikationssystem (KN) bei Anrufen von/zu Funkteilnehmern, mit
- zumindest einem Funkteilsystem (RSS, RSS*), über das den Zugang der Funkteilnehmer ermöglichende Kommunikationsendgeräte (MS) in einem zugehörigen Funkgebiet (RRA, RRA*) anschließbar sind,
- zumindest einer Vermittlungseinrichtung (MSC) zur Durchschaltung von Verbindungen,
das **dadurch gekennzeichnet ist,**
- **daß** die Verbindungen zwischen dem Funkteilsystem (RSS) und der Vermittlungseinrichtung (MSC) über eine Funkübertragungseinheit (UE) derart geführt werden,
- **daß** bei einem funkgebietsinternen Anruf zwischen Funkteilnehmern innerhalb desselben Funkgebiets (RRA) oder bei einem Anruf zwischen Funkteilnehmern in verschiedenen Funkgebieten (RRA, RRA*) nur Signalisierungsverbindungen (si) von der Funkübertragungseinheit (UE) zur Vermittlungseinrichtung (MSC) durchgeschaltet werden, und
- **daß** Nutzkanalverbindungen (ni) für den Fall des funkgebietsinternen Anrufs vom Funkteilsystem (RSS) selbst oder für den Fall des Anrufs zwischen Funkteilnehmern in verschiedenen Funkgebieten (RRA, RRA*) von der Funkübertragungseinheit (UE) zwischen einem ersten Funkteilsystem (RSS) und einem zweiten Funkteilsystem (RSS*) geschaltet werden.

2. Verfahren nach Anspruch 1, bei dem
für den Fall eines Anrufs, der einen Funkteilnehmer und einen Teilnehmer eines anderen Kommunikationssystems (PSTN) betrifft, nur die Signalisierungsverbindungen (si) von der Funkübertragungseinheit (UE) zu der Vermittlungseinrichtung (MSC) durchgeschaltet sowie die Nutzkanalverbindungen (ni) zwischen dem Funk-Kommunikationssystem (KN) und dem anderen Kommunikationssystem (PSTN) von der Funkübertragungseinheit (UE) geschaltet werden.

3. Verfahren nach Anspruch 1 oder 2, bei dem
über eine durchgeschaltete Signalisierungsverbindung (si) von der Vermittlungseinrichtung (MSC) eine Steuerinformation (intra, inter) rückgesendet wird, anhand der das Funkteilsystem (RSS) und/oder die Funkübertragungseinheit (UE) das Schalten der Nutzkanalverbindungen (ni) veranlassen.

4. Verfahren nach Anspruch 3, bei dem
über eine durchgeschaltete Signalisierungsverbindung (si) von der Vermittlungseinrichtung (MSC) zusätzlich ein Kennzeichen (cic) zur Identifikation von jeweils in der Vermittlungseinrichtung (MSC) für den Anruf genutzten Leitungsbaugruppen rückgesendet wird, anhand dessen das Funkteilsystem (RSS) das Vorliegen eines funkgebietsinternen Anrufs überprüft und das Schalten der Nutzkanalverbindungen (ni) veranlaßt.

5. Verfahren nach einem der vorhergehenden Ansprüche, bei dem auf den Nutzkanalverbindungen (ni) Sprachsignale übertragen werden.

6. Verfahren nach einem der vorhergehenden Ansprüche, bei dem als Funkübertragungseinheit (UE) ein Satellit (SAT) verwendet wird.

7. Verfahren nach einem der vorhergehenden Ansprüche, bei dem das Schalten der Signalisierungsverbindungen (si) und der Nutzkanalverbindungen (ni) für die Aufwärtsübertragungsrichtung vom Kommunikationsendgerät (MS) zum Funkteilsystem (RSS) nach Durchführung einer Transkodier- und Datenratenadaptionsfunktion und für die Abwärtsübertragungsrichtung vom Funkteilsystem (RSS) zum Kommunikationsendgerät (MS) vor Durchführung der Transkodier- und Datenratenadaptionsfunktion im jeweiligen Funkteilsystem (RSS) erfolgt.

8. Verfahren nach einem der vorhergehenden Ansprüche, bei dem das Schalten der Signalisierungsverbindungen (si) und der Nutzkanalverbindungen (ni) im jeweiligen Funkteilsystem (RSS, RSS*) von einer Schnittstelleneinheit (IWU, IWU*) mit Durchschaltefähigkeit gesteuert wird.

9. Verfahren nach einem der vorhergehenden Ansprüche, bei dem das Schalten der Signalisierungsverbindungen (si) zur Vermittlungseinrichtung (MSC) von einer Schnittstelleneinheit (IWU) mit Durchschaltefähigkeit gesteuert wird.

10. Funk-Kommunikationssystem (KN) zur Verbindungssteuerung bei Anrufen von/zu Funkteilnehmern, das
- zumindest ein Funkteilsystem (RSS, RSS*), über das den Zugang der Funkteilnehmer ermöglichende Kommunikationsendgeräte (MS) in einem zugehörigen Funkgebiet (RRA, RRA*) anschließbar sind, und
- zumindest eine Vermittlungseinrichtung (MSC) zur Durchschaltung von Verbindungen, aufweist
**gekennzeichnet durch**
eine Funkübertragungseinheit (UE), die zwischen dem Funkteilsystem (RSS) und der Vermittlungseinrichtung (MSC) angeordnet ist und über die die Verbindungen derart geführt sind,
- daß bei einem funkgebietsinternen Anruf zwischen Funkteilnehmern innerhalb desselben Funkgebiets (RRA) oder bei einem Anruf zwischen Funkteilnehmern in verschiedenen Funkgebieten (RRA, RRA*) nur Signalisierungsverbindungen (si), von der Funkübertragungseinheit (UE) zur Vermittlungseinrichtung (MSC) durchgeschaltet sind, und
- daß Nutzkanalverbindungen (ni) für den Fall des funkgebietsinternen Anrufs vom Funkteilsystem (RSS) selbst oder für den Fall des Anrufs zwischen Funkteilnehmern in verschiedenen Funkgebieten (RRA, RRA*) von der Funkübertragungseinheit (UE) zwischen einem ersten Funkteilsystem (RSS) und einem zweiten Funkteilsystem (RSS*) geschaltet sind.

11. Funk-Kommunikationssystem nach Anspruch 10, mit
einer Funkübertragungseinheit (UE), die als Satellit (SAT) ausgebildet ist.

12. Funk-Kommunikationssystem nach Anspruch 10 oder 11, mit einer Schnittstelleneinheit (IWU, IWU*) zur Steuerung des Schaltens der Signalisierungsverbindungen (si) und der Nutzkanalverbindungen (ni) im jeweiligen Funkteilsystem (RSS, RSS*).

13. Funk-Kommunikationssystem nach Anspruch 12, mit
an eine Transkodier- und Datenratenadaptionseinheit (TRAU, TRAU*) angeschalteter Schnittstelleneinheit (IWU, IWU*).

14. Funk-Kommunikationssystem nach einem der Ansprüche 10 bis 13, mit
einer Schnittstelleneinheit (IWU) zur Steuerung des Schaltens der Verbindungen in der Vermittlungseinrichtung (MSC).

## Claims

1. Method for connection control in a radio communications system (KN) for calls from/to radio subscribers, with
- at least one radio subsystem (RSS, RSS*) which can be used to connect communications terminals (MS), which allow access by the radio subscribers, in an associated radio area (RRA, RRA*),
- at least one switching centre (MSC) for switching through connections,
which is **characterized**
- **in that** the connections between the radio subsystem (RSS) and the switching centre (MSC) are routed via a radio transmission unit (UE) such
- that, in the case of an internal call, within a radio area, between radio subscribers within the same radio area (RRA) or in the case of a call between radio subscribers in different radio areas (RRA, RRA*), only signalling connections (si) from the radio transmission unit (UE) to the switching centre (MSC) are switched through, and
- **in that** user channel connections (ni) are switched between a first radio subsystem (RSS) and a second radio subsystem (RSS*) by the radio subsystem (RSS) itself in the case of the internal call within a radio area or by the radio transmission unit (UE) in the case of the call between radio subscribers in different radio areas (RRA, RRA*).

2. Method according to Claim 1, in which,
in the case of a call which relates to a radio subscriber and to a subscriber in another communications system (PSTN), only the signalling connections (si) from the radio transmission unit (UE) to the switching centre (MSC) are switched through and the user channel connections (ni) between the radio communications system (KN) and the other communications system (PSTN) are switched by the radio transmission unit (UE).

3. Method according to Claim 1 or 2, in which
the switching centre (MSC) uses a connected signalling connection (si) to return control information (intra, inter) which the radio subsystem (RSS) and/or the radio transmission unit (UE) use to prompt switching of the user channel connections (ni).

4. Method according to Claim 3, in which
the switching centre (MSC) uses a connected signalling connection (si) for additionally returning an identifier (cic) for identifying line assemblies which are respectively used in the switching centre (MSC) for the call and which the radio subsystem (RSS) uses to check the presence of an internal call within the radio area and to prompt switching of the user channel connections (ni).

5. Method according to one of the preceding claims, in which voice signals are transmitted on the user channel connections (ni).

6. Method according to one of the preceding claims, in which the radio transmission unit (UE) used is a satellite (SAT).

7. Method according to one of the preceding claims, in which, in the respective radio subsystem (RSS), the signalling connections (si) and the user channel connections (ni) are switched for the uplink from the communications terminal (MS) to the radio subsystem (RSS) after a transcoding and data-rate adaptation function has been performed, and are switched for the downlink from the radio subsystem (RSS) to the communications terminal (MS) before the transcoding and data-rate adaptation function has been performed.

8. Method according to one of the preceding claims, in which the switching of the signalling connections (si) and of the user channel connections (ni) in the respective radio subsystem (RSS, RSS*) is controlled by an interface unit (IWU, IWU*) with a connection capability.

9. Method according to one of the preceding claims, in which the switching of the signalling connections (si) to the switching centre (MSC) is controlled by an interface unit (IWU) with a connection capability.

10. Radio communications system (KN) for connection control for calls from/to radio subscribers which has
- at least one radio subsystem (RSS, RSS*) which can be used to connect communications terminals (MS), which allow access by the radio subscribers, in an associated radio area (RRA, RRA*), and
- at least one switching centre (MSC) for switching through connections,
**characterized by**
a radio transmission unit (UE) which is arranged between the radio subsystem (RSS) and the switching centre (MSC) and via which the connections are routed such
- that, in the case of an internal call, within a radio area, between radio subscribers within the same radio area (RRA) or in the case of a call between radio subscribers in different radio areas (RRA, RRA*), only signalling connections (si) from the radio transmission unit (UE) to the switching centre (MSC) are switched through, and
- in that user channel connections (ni) are switched between a first radio subsystem (RSS) and a second radio subsystem (RSS*) by the radio subsystem (RSS) itself in the case of the internal call within a radio area or by the radio transmission unit (UE) in the case of the call between radio subscribers in different radio areas (RRA, RRA*).

11. Radio communications system as claimed in Claim 10, having
a radio transmission unit (UE) which is in the form of a satellite (SAT).

12. Radio communications system as claimed in Claim 10 or 11, having an interface unit (IWU, IWU*) for controlling the switching of the signalling connections (si) and of the user channel connections (ni) in the respective radio subsystem (RSS, RSS*).

13. Radio communications system as claimed in Claim 12, having
an interface unit (IWU, IWU*) connected to a transcoding and data-rate adaptation unit (TRAU, TRAU*).

14. Radio communications system as claimed in one of Claims 10 to 13, having
an interface unit (IWU) for controlling the switching of the connections in the switching centre (MSC).

## Revendications

1. Procédé pour la commande de connexion dans un système de radiocommunication (KN) dans le cas d'appels de/vers des abonnés, comprenant :
- au moins un système radio partiel (RSS, RSS*) par lequel des terminaux de communication (MS) donnant l'accès aux abonnés peuvent être raccordés dans une zone radio associée (RRA, RRA*),
- au moins un dispositif de central (MSC) pour l'établissement de liaisons,
**caractérisé en ce que**
- les liaisons entre le système radio partiel (RSS) et le dispositif de central (MSC) sont réalisées par l'intermédiaire d'une unité de transmission radio (UE) de telle sorte que
- dans le cas d'un appel inteme à la zone radio entre des abonnés situés dans la même zone radio (RRA) ou dans le cas d'un appel entre des abonnés radio situés dans différentes zones radio (RRA, RRA*), seules des liaisons de signalisation (si) sont établies entre l'unité de transmission radio (UE) et le dispositif de central (MSC), et **en ce que**
- des liaisons par canal de trafic (ni) entre un premier système radio partiel (RSS) et un deuxième système radio partiel (RSS*) sont établies par le système radio partiel (RSS) lui-même dans le cas d'un appel interne à la zone radio et par l'unité de transmission radio (UE) dans le cas d'un appel entre des abonnés radio situés dans différentes zones radio (RRA, RRA*).

2. Procédé selon la revendication 1, dans lequel, dans le cas d'un appel qui concerne un abonné radio et un abonné d'un autre système de communication (PSTN), seules les liaisons de signalisation (si) vers le dispositif de central (MSC) sont établies par l'unité de transmission radio (UE), les liaisons par canal de trafic (ni) entre le système de communication radio (KN) et l'autre système de communication (PSTN) étant établies par l'unité de transmission radio (UE).

3. Procédé selon la revendication 1 ou 2, dans lequel une information de commande (intra, inter) est renvoyée par le dispositif de central (MSC) par l'intermédiaire d'une liaison de signalisation (si) établie, l'information de commande permettant au système radio partiel (RSS) et/ou à l'unité de transmission radio (UE) d'établir les liaisons par canal de trafic (ni).

4. Procédé selon la revendication 3, dans lequel en supplément, une caractéristique d'identification (cic) de faisceaux de conducteurs utilisés chaque fois dans le dispositif de central (MSC) pour l'appel est renvoyée par le dispositif de central (MSC) par l'intermédiaire d'une liaison de signalisation (si) établie, le système radio partiel (RSS) vérifiant à l'aide de cette caractéristique la présence d'un appel interne à la zone radio et permettant l'établissement des liaisons par canal de trafic (ni).

5. Procédé selon l'une des revendications précédentes, dans lequel des signaux vocaux sont transmis par les liaisons par canal de trafic (ni).

6. Procédé selon l'une des revendications précédentes, dans lequel on utilise comme unité de transmission radio (UE) un satellite (SAT).

7. Procédé selon l'une des revendications précédentes, dans lequel l'établissement d'une liaison de signalisation (si) et des liaisons par canal de trafic (ni) dans la direction de transmission montante entre le terminal de communication (MS) et le système radio partiel (RSS) s'effectue après exécution d'une fonction de transcodage et d'adaptation des débits de données et dans la direction de transmission descendante entre le système radio partiel (RSS) et le terminal de communication (MS) avant l'exécution de la fonction de transcodage et d'adaptation des débits de données dans chaque système radio partiel (RSS).

8. Procédé selon l'une des revendications précédentes, dans lequel l'établissement des liaisons de signalisation (si) et des liaisons par canal de trafic (ni) dans chaque système radio partiel (RSS, RSS*) est commandé par une unité d'interface (IWU, IWU*) dotée de capacités d'établissement de liaisons.

9. Procédé selon l'une des revendications précédentes, dans lequel l'établissement des liaisons de signalisation (si) vers le dispositif de central (MSC) est commandé par une unité d'interface (IWU) dotée de capacités d'établissement de liaisons.

10. Système de radiocommunication (KN) pour la commande de connexion dans le cas d'appels de/vers des abonnés, qui présentent
- au moins un système radio partiel (RSS, RSS*) par lequel des terminaux de communication (MS) permettant l'accès aux abonnés radio peuvent être raccordés dans une zone radio (RRA, RRA*) associée, et
- au moins un dispositif de central (MSC) pour l'établissement de liaisons,
**caractérisé par**
- une unité de transmission radio (UE) qui est disposée entre le système radio partiel (RSS) et le dispositif de central (MSC) et par l'intermédiaire de laquelle les liaisons sont réalisées de telle sorte que
- dans le cas d'un appel interne à une zone radio entre des abonnés radio situés à l'intérieur de la même zone radio (RRA) ou dans le cas d'un appel entre des abonnés radio situés dans différentes zones radio (RRA, RRA*), seules des liaisons de signalisation (si) vers le dispositif de central (MSC) sont établies par l'unité de transmission radio (UE), et **en ce que**
- des liaisons par canal de trafic (ni) entre un premier système radio partiel (RSS) et un deuxième système radio partiel (RSS*) sont établies par le système radio partiel (RSS) lui-même dans le cas d'un appel inteme à la zone radio ou par l'unité de transmission radio (UE) dans le cas d'un appel entre des abonnés radio situés dans différentes zones radio (RRA, RRA*).

11. Système de radiocommunication selon la revendication 10, comprenant une unité de transmission radio (UE) qui est configurée comme satellite (SAT).

12. Système de radiocommunication selon la revendication 10 ou 11, comprenant une unité d'interface (IWU, IWU*) pour la commande de l'établissement des liaisons de signalisation (si) et des liaisons par canal de trafic (ni) dans chaque système radio partiel (RSS, RSS*).

13. Système de radiocommunication selon la revendication 12, comprenant une unité d'interface (IWU, IWU*) raccordée à une unité de transcodage et d'adaptation des débits de données (TRAU, TRAU*).

14. Système de radiocommunication selon l'une des revendications 10 à 13, comprenant une unité d'interface (IWU) pour la commande de l'établissement des liaisons dans le dispositif de central (MSC).
